# EUROPEAN PATENT APPLICATION

(11) **EP 4 841 503 A1**
(43) Date of publication of application: **18.11.2026**
(21) Application number: 25382478.3
(22) Date of filing: 12.05.2025
(51) Int. Cl.: G06K 19/02, B32B 15/00

(54) **CARD BODY AND CHIP CARD WITH SAME COMPRISING RECYCLED AND POLY-VINYL-CHLORIDE LAYERS**

(71) Applicant: Giesecke+Devrient ePayments GmbH, 81677 München (DE)
(72) Inventor: Gali, Josep, 08820 El Prat de Llobregat (Barcelona) (ES)
(74) Representative: LKGLOBAL Partnerschaftsgesellschaft mbB

(57) **Abstract**

The present invention relates to a card body (2) for a chip card (1), in particular a transaction card, and to a chip card (1), in particular a transaction card, with a corresponding card body (2), comprising at least one metal layer (13), a core layer (12) containing a glycol-modified PET, PET-G, and an antenna layer (14) for accommodating an antenna element (4), wherein a cover layer (11) for covering the core layer and/or the antenna layer (14) contains and/or contain, respectively, poly-vinyl chloride, PVC.

## Description

### Technical Field

The present disclosure relates to the field of chip cards or other portable data carriers comprising a card body comprising layers made of recycled material. In particular, the present disclosure relates to a card body for a chip card, in particular a transaction card, comprising at least one metal layer, a core layer containing a glycol-modified PET (PET-G) and an antenna layer for accommodating an antenna element, and to a chip card, in particular a transaction card.

### Background of the Invention

Chip cards, also known as portable data carriers, are known from the state of the art and can be used, for example, for cashless payment of goods or services, for personal identification and/or for access to Internet-based application programs. Accordingly, there are, for example, card-shaped data carriers in the form of chip cards in general, payment cards, such as credit cards or debit cards, as well as ID cards or identity cards. Such chip cards usually have a card body carrying a chip module comprising an electronic circuit with an electronic component, such as an integrated chip, which can be accessed in order to read data from it and based on this, allow a legitimate owner of the data carrier to perform and/or authorize a specific action, such as a transaction, in particular a financial transaction.

While identification cards, such as personal identity cards, driving licenses, and membership cards are usually less frequently used, in particular banking cards are subject to continuous mechanical stress as they are often inserted into card reading equipment, such as automated teller machines (ATMs), payment card readers, etc. Due to this intense mechanical stress, in particular banking cards are prone to continuous wear and tear which leads to the need of frequent replacement of used banking cards by new banking cards. Apart from that have security documents in the form of cards for security reasons usually expiry dates which are often for personal identity cards around ten years from issuance and for banking cards around three to five years from issuance. This leads to a huge amount of old security documents in the form of cards each year which are generated as waste.

According to the prior art, card bodies of portable data carriers and security elements are usually made of relatively stiff plastic which can provide a relatively high stability and resistance of the card body against environmental influences while allowing for an implementation of a wide range of features as well as adaptations of the card body, for example by forming or embedding secure features in the plastic material. The card bodies are commonly provided as multilayered structures comprising various layers of polymers which are predominately poly(vinyl chloride) (PVC) which has been found to be the most robust material for the purposes of the security cards, and further usually also contain metal parts, such as security stripes, holograms, chips, etc. Due to the excessive use of PVC recycling of the materials from these multilayered security cards, in particular the polymeric components thereof, is tedious if not impossible at all as recycling of PVC in general has been found to be challenging due to its chemical resistance and the potential liberation of hydrochloric acid during any treatment process of PVC for the purpose of potential recycling.

Hence, presently, waste security cards are usually disposed in landfills or are in some instances even burned. Both of these types of disposal are less favourable from an environmental point of view. Disposing PVC in landfills bears the risk that during decomposition of the PVC chlorinated compounds or polymer fragments are spilled in the environment. Burning should be avoided due to the formation of gaseous hydrochloric acid when burning PVC. The problem of how to discard waste security cards has become even more pronounced with the development of new types of metal-containing layers, such as in particular aluminium-containing layers, for security cards which provide for a certain optical effect which on the one hand gives the security card an aesthetically attractive appearance and on the other hand also complicates counterfeiting of the security card.

An example of such new types of metal-containing layers are layers of the HoloLam- series provided by ITW Specialty Films, such as HoloLamPlus^{®}. For the optical effects achieved by these metal-containing layers, such as in particular aluminum-containing layers, it is crucial that the metal-containing layer is covered by a polymer layer made of poly(ethylene terephthalate) (PET). This leads to security documents in the form of cards which not only have metallic parts in it, but which also have various layers made from even different types of polymers, i.e. at least PVC and PET. This further complicates any potential recycling of such security cards as in any recycling process the layers made from different polymers need to be separated first in order to be able to recycle each type of polymer individually. It has been found that the separation of a metal-containing layer, such as in particular an aluminium-containing layer, which is covered by a PET layer is very difficult to separate from any PVC layers, as these layers are all properly joined together, usually by thermal bonding and/or use of adhesives. Moreover, the layers of security cards are very thin, usually in the micro-meter range, which further complicates proper separation of any layers of such security cards.

In view of the above, there is a need for improved security documents in the form of cards comprising multiple layers. In particular chip cards known from the prior art may not satisfy all requirements regarding recyclability on the one hand, and stability as well as manufacturability of the other hand. In particular, Moreover, it would be desirable if such security documents in the form of cards having improved recyclability at the same time also have a wear and tear resistance as well as chemical resistance which is at least similar and preferably even superior compared to known security cards.

### Summary of the Invention

It may be seen as an object underlying the present invention to overcome above-mentioned limitations of chip cards known from the prior art. In particular, it may be seen as an object underlying the present invention to provide a chip card which contains a metal layer and hast improved recyclability, stability and manufacturability compared to the prior art. These and further objects are at least partially achieved by the subject-matter of the independent claims.

According to an aspect, a card body for a chip card, in particular a transaction card, is provided, comprising at least one metal layer, a core layer containing a PET-G, and an antenna layer for accommodating an antenna element, wherein a cover layer for covering the core layer and/or the antenna layer contains and/or contain, respectively, PVC.

According to an aspect, a chip card, in particular a transaction card, is provided, comprising a corresponding card body

A respective multilayered structure of the card body may comprise at least one core layer. The core layer which can be considered as a base layer of the multilayered card structure mainly provides for the overall stiffness and robustness of the card structure. The core layer may be one discrete layer but need not necessarily be only one discrete layer. Rather, the core layer can also comprise at least two, at least three, or even at least four layers. Albeit in principle a lower number of individual core layers, such as only one individual core layer, is preferable for production efficiency and costs reasons, in some instances more than one individual layer is preferred. For instance, if one core layer contains an antenna, it is preferable, if the antenna-containing core layer is covered by at least one, preferably two core stock layers on each side of the antenna-containing core layer. Such structural setup provides for instance particular stability of the multilayered card structure and/or ensures that the antenna is well-protected and not exposed to the environment.

The proposed solution allows for improved recyclability of the multilayered cards compared to known security cards, during a recycling process of such multilayered cards, a full separation of all layers is not necessary. This significantly simplifies any recycling process for these multi-layered cards. The PET-G itself can be provided as recycled material (rPET-G). Moreover, the PVC helps in providing increased stability and at the same time facilitates manufacturing as it has well known properties. In turn, recycling of remaining layers containing PET is a well-known and widely performed process and, hence, facilities recycling of the card body.

The proposed solution thus has the advantage over the prior art that it enables to provide recyclable as well as mechanically stable and well manufacturable multilayered cards comprising metal layers. Such multilayered cards as described herein have a wear and tear resistance as well as chemical resistance which is at least similar compared to known multilayered cards, in particular compared to multilayered cards comprising purely PVC-containing layers. According to the proposed solution, both recycled and metal layers can be provided in a chip card for enhanced sustainability, yet, with optical effects for an appealing appearance.

Further developments can be derived from the dependent claims and from the following description. Features described with reference to a card body and/or a chip card, as well as components thereof, may be implemented as method steps, or vice versa. Therefore, the description provided in the context of the card body, chip card, and/or construction kit applies in an analogous manner also to respective methods. In particular, features and functions of the card body and/or chip card as well as any of their elements and components, may be implemented as method steps which in turn may be implemented as respective device features or functions.

According to a possible embodiment, the cover layer comprises or is comprised of PVC. The cover layer can thereby be produced with the material having well known properties and/or relatively high degree of stability. This helps in providing recyclable as well as mechanically stable and well manufacturable multilayered cards comprising metal layers.

According to a possible embodiment, the antenna layer comprises or is comprised of PVC for accommodating the antenna element. The antenna element can be embedded within the PVC. This further helps in providing recyclable as well as mechanically stable and well manufacturable multilayered cards comprising metal layers.

According to a possible embodiment, the wherein the cover layer contains PET-G. In particular, rPET-G may be used. Thereby, an amount of recycled material involved in the production process of the chip card can be increased. This further helps in providing chip cards in an environmentally sustainable manner.

According to a possible embodiment, the antenna layer contains PET-G. Here again, in particular rPET-G may be used. Thereby, an amount of recycled material involved in the production process of the chip card can be increased. This additionally helps in providing chip cards in an environmentally sustainable manner.

According to a possible embodiment, the metal layer is arranged in the core layer. The core layer may be designed and constructed in order to, at the one hand, provide an appealing optical effect based on the metal layer, and on the other hand, the required stability and manufacturability. This further helps in providing recyclable as well as mechanically stable and well manufacturable multilayered cards comprising metal layers.

According to a possible embodiment, the metal-layer is arranged between two sub-layers of the core layer. For example, the metal-layer may be provided with a coating for improved stability. This additionally helps in providing recyclable as well as mechanically stable and well manufacturable multilayered cards comprising metal layers.

According to a possible embodiment, the core layer contains PET. For example, the metal layer may be sandwiched between a PET layer and an rPET-G layer, for example, with the coating provided between the metal layer and the rPET-G layer. The PET layer can be useful to enhance optical effects provided by means of the metal layer, while the rPET-G layer helps to increase the amount of recycled material used. Thereby, recyclable as well as mechanically stable and well manufacturable multilayered cards comprising metal layers and recycled material can be provided.

According to a possible embodiment, the metal layer contains aluminium. For example, the metal layer may be provided as an aluminium layer. Aluminium has well known properties. Hence, using aluminium further helps in providing recyclable as well as mechanically stable and well manufacturable multilayered cards comprising metal layers.

### Brief Description of the Drawings

- Fig. 1: is a schematic top view of an exemplary embodiment of a chip card having a multi-layered card body.
- Fig. 2: is a schematic cross-sectional view of the chip card along a cross-sectional line A-A depicted in Fig. 1.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject-matter may be obtained through a synoptic review of the illustrations together with a review of the detailed description that follows.

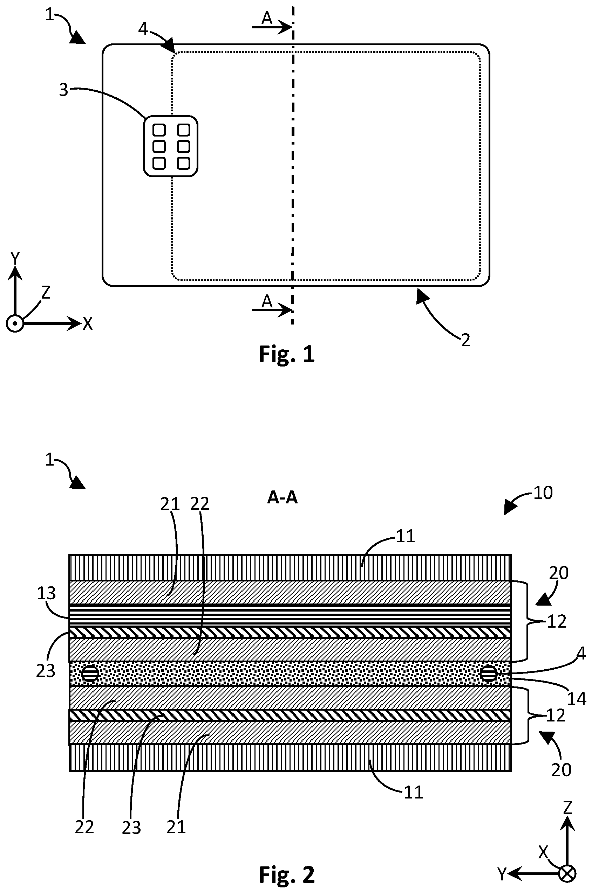

Fig. 1 shows a schematic top view of a chip card 1 having a card body 2 and a chip module 3 connected to an antenna element 4. The chip card 1 extends in a longitudinal direction X, a transverse direction Y, and a height direction Z, together forming a Cartesian coordinate system. The card body 2 comprises a multi-layered structure 10 with cover layers 11, core layers 12, at least one metal layer 13, and an antenna layer 14 (see Fig. 2).

Fig. 2 shows a schematic cross-sectional view of the chip card 1 along a cross-sectional line A-A depicted in Fig. 1. Here it becomes apparent, that the core layers 12 each comprise a number of sublayers 20 including the metal layer 13, polymer layers 21, further polymer layers 22 and coatings 23. In the present exemplary embodiments, the cover layer 11 can be a clear layer containing rPET-G and/or PVC for coating. The metal layer 13 can be an aluminium layer. The antenna layer can contain rPET-G and/or PVC. The polymer layer 21 can be a PET layer. The further polymer layer 22 can contain rPET-G. The coating 23 can provide an adhesive layer to improve adhesion between the respective adjacent layers. It should be understood that the relative thicknesses as indicated in Fig. 2 are exemplarily only. The skilled person may easily adapt the thickness of any of the layers of the multilayered card structure according to needs. The multi-layered structure 10 may also contain additional components and/or inserts such as magnetic strips, further electronic chips, holograms, etc. (not shown).

According to present exemplary embodiments, the multilayered structure 10 may further comprise one or more adhesive layers. Adhesive layers are used to improve adherence between different layers of the multilayered structure, in particular between metal-based layers and polymer-based layers, but also between potential clear layers and potential core layers of the multilayered card structure. Suitable adhesives are known by the skilled person and are usually polymer based. The polymers of the adhesive layers, if present, do not necessarily comprise PET-G or PET. In other words, with the term "except of potentially present adhesive layers" as used herein and in the claims, it is meant that any such potentially present adhesive layer(s) do not necessarily comprise PET-G or PET. In even other words, the term "except of potentially present adhesive layers" can be construed as "with the proviso that potentially present adhesive layers do not need to comprise PET-G or PET". However, in some embodiments of the present invention, the multilayered card structure does not comprise any adhesive layers. In other embodiments, at least one adhesive layer is present and, preferably, all of the at least one adhesive layer(s) also comprise PET-G or PET. Adhesive layers are normally very thin and usually have a thickness of less than 10 µm, such as less than 8 µm, less than 7 µm, less than 5 µm, or even less than 3 µm.

The improved recyclability of multilayered structure 20 is due to that all polymer-based layers of the inventive multilayered card structure as described herein comprise a polymer being at least partly based on PET. The polymer may be pure PET (i.e. 100% PET) or, alternatively, may at least partly comprise PET. If the polymer is pure PET, the polymer consists of 100% PET. PET is usually made from ethylene glycol monomers and terephthalic acid monomers which are condensed so to form ester bonds. Hence, in some embodiments of the present invention, if the polymer is pure PET, all monomers from which the PET is made are either ethylene glycol monomers or terephthalic acid monomers.

If the polymer at least partly comprises PET, the polymer may for instance comprise at least 50 wt. %, at least 55 wt. %, at least 60 wt. %, at least 65 wt. %, at least 70 wt. %, at least 75 wt. %, at least 80 wt. %, at least 85 wt.%, at least 90 wt.%, or at least 95 wt.% PET, the wt. % being based on the total weight of the polymer comprising at least partly PET-units. Hence, in some embodiments of the present invention, if the polymer at least partly comprises PET, the polymer comprises substructure units made from one ethylene glycol monomer and one terephthalic acid monomer which are condensed so to form ester bonds.

If the polymer at least partly comprises PET, the polymer comprises further monomeric units which are not ethylene glycol monomers and terephthalic acid monomers. These monomers may be further glycols, i.e. glycols which are not ethylene glycol. Such polymers are referred herein to as glycol-modified poly(ethylene terephthalate), or as glycol-modified PET, or as PET-G. As used herein in the context of the further glycols for the glycol modification, the term "glycol" encompasses any polyol, i.e. any compound comprising at least two hydroxy groups, such as diols, triols, or tetrols. Preferably, the further glycol for the glycol modification is a diol. In principle, any polyol may be used for the glycol modification, such as alkanepolyols, such as preferably alkandiols, such as propandiols, such as 1,2-propandiol, or 1,3-propandiol, butandiols, such as 1,2-butandiol, 1,3-butandiol, or 1,4-butandiol, pentanediols, such as 1,2-pentanediol, 1,3-pentanediol, 1,4-pentanediol, or 1,5-pentanediol, hexandiols, such as 1,2-hexandiol, 1,3-hexandiol, 1,4-hexandiol, 1,5-hexandiol, or 1,6-hexandiol, cyclic polyols, such as preferably cyclic diols, such as cyclohexanediols, such as 1,2-cyclohexanediol, 1,3-cyclohexanediol, or 1,4-cyclohexanediol, and cyclohexanedialkanols, such as 1,2-cyclohexanedimethanol, 1,3-cyclohexanedimethanol, 1,4-cyclohexanedimethanol, 1,2-cyclohexanediethanol, 1,3-cyclohexanediethanol, and 1,4-cyclohexanediethanol, or any mixture of these polyols. One particular preferred polyol for glycol-modified PET for use in the multilayered card structure of the present invention is 1,4-cyclohexanedimethanol.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: data carrier / chip card
- 2: card body
- 3: chip module
- 4: antenna element
- 10: multilayered structure
- 11: cover layer
- 12: core layer
- 13: metal layer
- 14: antenna layer
- 20: sublayer
- 21: polymer layer
- 22: further polymer layer
- 23: coating
- X: longitudinal direction
- Y: transverse direction
- Z: height direction

## Claims

1. Card body (2) for a chip card (1), in particular a transaction card, comprising at least one metal layer (13), a core layer (12) containing a glycol-modified PET, PET-G, and an antenna layer (14) for accommodating an antenna element (4), wherein a cover layer (11) for covering the core layer and/or the antenna layer (14) contains and/or contain, respectively, poly-vinyl chloride, PVC.

2. Card body (2) according to claim 1, wherein the cover layer (11) comprises or is comprised of PVC.

3. Card body (2) according to claim 1 or 2, wherein the antenna layer (14) comprises or is comprised of PVC for accommodating the antenna element (4).

4. Card body (2) according to at least one of claims 1 to 3, wherein the wherein the cover layer (11) contains PET-G.

5. Card body (2) according to at least one of claim 1 to 4, wherein the antenna layer (14) contains PET-G.

6. Card body (2) according to at least one of claims 1 to 5, wherein the metal layer (13) is arranged in the core layer (12).

7. Card body (2) according to at least one of claims 1 to 6, wherein the metal-layer is arranged between two sub-layers of the core layer.

8. Card body (2) according to at least one of claims 1 to 7, wherein the metal layer (13) contains a poly-ethylene terephthalate, PET).

9. Card body (2) according to at least one of claims 1 to 8, wherein the metal layer (13) contains aluminium.

10. Chip card (1), in particular a transaction card, comprising a card body (2) according to at least one of claims 1 to 9.
